# EUROPÄISCHE PATENTSCHRIFT

(11) **EP 1 407 633 B1**
(45) Veröffentlichungstag und Bekanntmachung des Hinweises auf die Patenterteilung: **18.04.2007**
(21) Anmeldenummer: 02752985.8
(22) Anmeldetag: 01.07.2002
(51) Int. Cl.: H04Q 7/38, G01S 5/02

(54) **VERFAHREN SOWIE VORRICHTUNG ZUR POSITIONSBESTIMMUNG VON TEILNEHMERGERÄTEN EINES FUNKKOMMUNIKATIONSSYSTEMS MIT HILFE VON ZUSÄTZLICHEN POSITIONSELEMENTEN IN BENACHBARTEN FUNKZELLEN**
METHOD AND DEVICE FOR POSITIONAL DETERMINATION OF USER APPLIANCES IN A RADIO COMMUNICATION SYSTEM USING ADDITIONAL POSITIONAL ELEMENTS IN NEIGHBOURING RADIO CELLS
PROCEDE ET DISPOSITIF DE DETERMINATION DE LA POSITION D'APPAREILS ABONNES D'UN SYSTEME DE COMMUNICATION RADIO A L'AIDE D'ELEMENTS DE POSITION SUPPLEMENTAIRES DANS DES CELLULES RADIO VOISINES

(30) Priorität: 17.07.2001 DE 10134589
(43) Veröffentlichungstag der Anmeldung: 14.04.2004
(73) Patentinhaber: SIEMENS AKTIENGESELLSCHAFT, 80333 München (DE)
(72) Erfinder: BÄR, Siegfried, 85716 Unterschleissheim (DE); GOTTSCHALK, Thomas, D-12524 Berlin (DE)
(86) Internationale Anmeldenummer: PCT/DE2002/002386
(87) Internationale Veröffentlichungsnummer: WO 2003/009625

(56) Entgegenhaltungen:
- EP-A- 1 091 611
- WO-A-00/69199
- US-A- 6 157 842
- "Universal Mobile Telecommunications System (UMTS); Stage 2 Functional Specification of UE Positioning in UTRAN (3GPP TS 25.305 version 4.0.0 Release 4)" ETSI TS 125 305 V4.0.0, März 2001 (2001-03), XP002215742

## Beschreibung

Verfahren zur Positionsbestimmung mindestens eines Teilnehmergeräts eines Funkkommunikationssystems, das eine Vielzahl von Basisstationen zur Aufteilung in Funkzellen aufweist, wobei von jeder Basisstation jeweils eine Funkzelle aufgespannt und diese hinsichtlich des Funkverkehrs über mindestens eine Luftschnittstelle versorgt wird,
wobei mindestens ein Ortungsmesssignal von mindestens einem zusätzlichen Positionselement gesendet wird.

In Funkkommunikationssystemen wie z.B. nach dem GSM oder UMTS Standard kann es in der Praxis ggf. von Interesse sein, den aktuellen Standort bzw. Aufenthaltsort eines bestimmten Teilnehmergerätes, insbesondere Mobilfunkgeräts, zu bestimmen. Die Anforderung an eine Positionsbestimmung des jeweiligen Teilnehmergerätes kann dabei sowohl vom jeweiligen Teilnehmer selbst, einem anderen Teilnehmer, als auch von der Netzinfrastrukturseite her kommen.

Gemäß der EP 1 091 611 A1 ist in jeder Funkzelle zusätzlich zu deren Basisstation eine Vielzahl von Positionselementen vorgesehen, die Positionssignale aussenden. Von einem Mobilfunkgerät wird zu seiner Positionsbestimmung mindestens ein Positionssignal lediglich von den Positionselementen in seiner jeweiligen Aufenthaltfunkzelle detektiert und verwendet.

Bei der WO 00/69199 werden zur Positionsbestimmung eines Mobilfunkgeräts Messsignale lediglich von Basisstationen in Funkzellen verwendet, die der momentanen Aufenthaltsfunkzelle dieses Mobilfunkgeräts benachbart sind.

Dabei kann auf der Funkübertragungsstrecke zwischen der jeweiligen Basisstation in der jeweiligen Nachbarfunkzelle und den,zu ortenden Mobilfunkgerät jeweils ein Relais zwischengeschaltet werden, wenn keine direkte Luftübertragungsstrecke zwischen dem Mobilfunkgerät und der jeweilig benachbarten Basisstation vorliegt.

Der Erfindung liegt die Aufgabe zugrunde, einen Weg aufzuzeigen, wie bei einem Funkkommunikationssystem eine Positionsbestimmung des jeweiligen Teilnehmergeräts möglichst effizient durchgeführt werden kann. Diese Aufgabe wird bei einem Verfahren der eingangs genannten Art dadurch gelöst, dass bei einer Mischung von Funkzellen mit und ohne zusätzlichen Positionselementen mindestens ein Ortungsmesssignal von mindestens einem Positionselement aus mindestens einer Funkzelle gesendet wird, die der Aufenthaltsfunkzelle des jeweilig zu ortenden Teilnehmergeräts benachbart ist, in der kein Positionselement oder zu wenige Positionselemente vorhanden sind, und wobei dieses Ortungsmesssignal zur Positionsbestimmung des Teilnehmergeräts in dessen momentaner Aufenthaltsfunkzelle, in der kein Positionselement oder zu wenige Positionselemente vorhanden sind, herangezogen wird.

Dadurch, dass von mindestens einem Positionselement in einer oder mehreren Nachbarfunkzellen jeweils mindestens ein Ortungsmesssignal gesendet wird, ist es nicht erforderlich, dass in der momentanen Aufenthaltsfunkzelle des jeweilig zu ortenden Teilnehmergeräts selbst Positionselemente zusätzlich vorgesehen sind. Dadurch ist eine effektive Ausnutzung etwaig bereits vorhandener Positionselemente ermöglicht.
Zusatzaufwendungen für die Funknetzinfrastruktur können somit entfallen.

Die Erfindung betrifft auch eine Vorrichtung zur Positionsbestimmung mindestens eines Teilnehmergeräts eines Funkkommunikationssystems mit Hilfe einer Auswerte-/Recheneinheit, wobei dieses Funkkommunikationssystem zur Positionsbestimmung mindestens eines Teilnehmergeräts eine Vielzahl von Basisstationen zur Aufteilung in Funkzellen aufweist, wobei von jeder Basisstation jeweils eine Funkzelle aufgespannt und diese hinsichtlich des Funkverkehrs über mindestens eine Luftschnittstelle versorgt ist, wobei mindestens ein Ortungsmesssignal von mindestens einem zusätzlichen Positionselement gesendet wird, welche dadurch gekennzeichnet ist, dass die Auswerte-/Recheneinheit zur Positionsbestimmung eines Teilnehmergeräts in einer Aufenthaltsfunkzelle, in der kein Positionselement oder zu wenige Positionselemente vorhanden sind, mindestens ein Ortungssignal heranzieht, das bei einer Mischung von Funkzellen mit und ohne zusätzlichen Positionselementen von mindestens einem Positionselement aus mindestens einer Funkzelle gesendet wird, die der Aufenthaltsfunkzelle des jeweilig zu ortenden Teilnehmergeräts benachbart ist, in der kein Positionselement oder zu wenige Positionselemente vorhanden sind.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:
- Figur 1: in schematischer Darstellung mehrere Funkzellen eines Funkkommunikationssystems, bei dem lediglich mit Hilfe von Positionselementen in Funkzellen, die der aktuellen Aufenthaltsfunkzelle eines zu ortenden Mobilfunkgeräts benachbart sind, dessen Position nach einer ersten Variante des erfindungsgemäßen Verfahrens bestimmbar ist,
- Figur 2: in schematischer Darstellung eine Funkzelle eines Funkkommunikationssystems, in der mit Hilfe von dort angeordneten Positionselementen die Position eines sich dort aufhaltenden Mobilfunkgeräts in bekannter Weise bestimmbar ist,
- Figur 3: in schematischer Darstellung eine zweite Variante des erfindungsgemäßen Verfahrens zur Positionsbe stimmung eines Teilnehmergeräts des Funkkommunikationssystems nach Figur 1,
- Figur 4: in schematischer Darstellung die weiteren Komponenten des Funkkommunikationssystems nach Figur 1, und
- Figur 5: in schematischer Darstellung die zeitliche Struktur eines Zeitrahmens der Funksignalisierung auf der Luftschnittstelle zwischen einer Basisstation und einem zu ortenden Teilnehmergerät des erfindungsgemäßen Funkkommunikationssystems nach den Figuren 1 bzw. 3, wobei in einen freien Signalabschnitt eines Zeitschlitzes dieses Zeitrahmens ein Ortungsmesssignal von mindestens einem Positionselement mindestens einer der Nachbarfunkzellen nach dem erfindungsgemäßen Verfahren eingefügt worden ist.

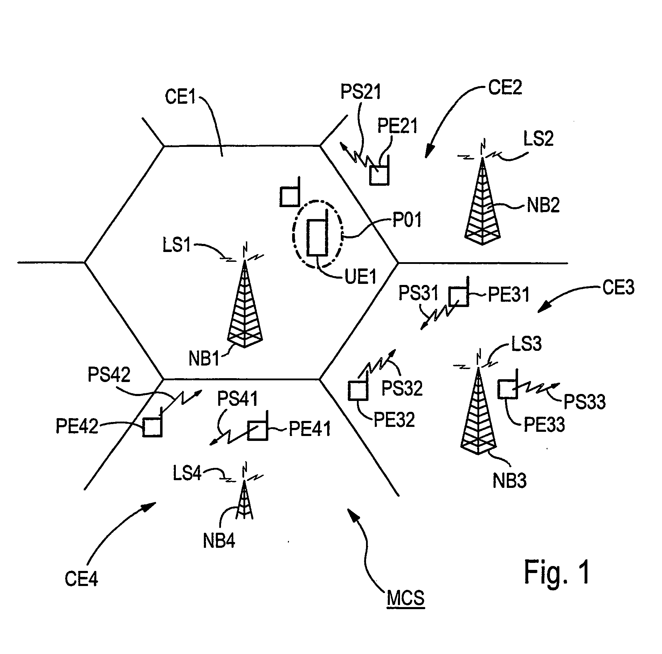

Elemente mit gleicher Funktion und Wirkungsweise sind in den Figuren 1 mit 5 jeweils mit denselben Bezugszeichen versehen.

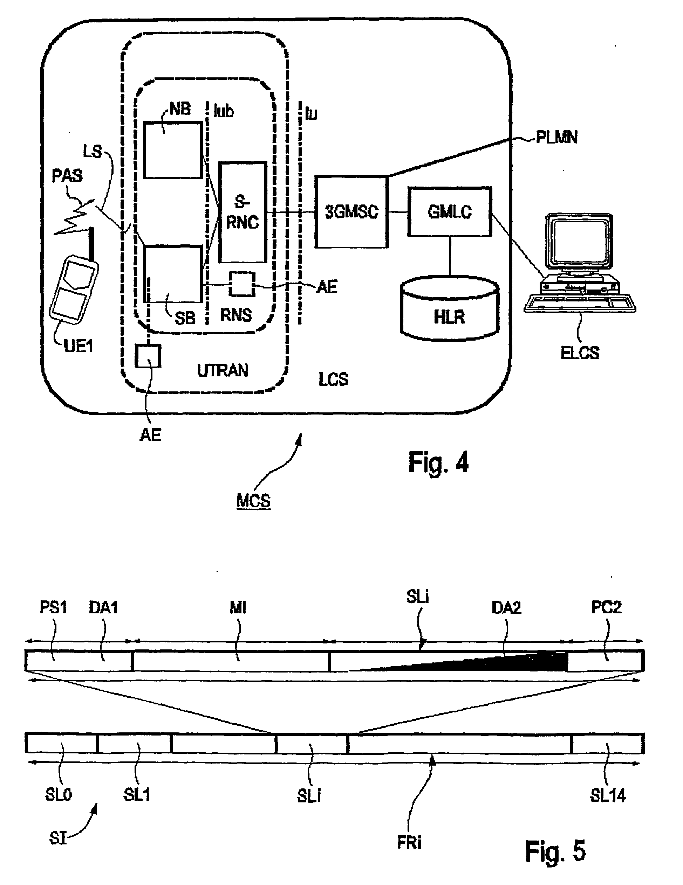

In Figur 4 sind schematisch die funktionalen Komponenten eines zellularen Funkkommunikationssystems MCS abgebildet, bei dem Nachrichtensignale über mindestens eine vordefinierte Luftschnittstelle LS1 zwischen mindestens einem Teilnehmergerät, insbesondere Mobilfunkgerät wie z.B. UE1, und mindestens einer Basisstation wie z.B. NB, SB nach einem Zeitmultiplex-Vielfachzugriffs-Übertragungsverfahren übertragen werden. Es ist vorzugsweise als Mobilfunksystem nach dem UMTS (= universal mobile telecommunication system) -Standard ausgebildet. Dabei werden Nachrichtensignale über die jeweilige Luftschnittstelle insbesondere nach einem kombinierten TDMA/CDMA-Vielfachzugriffs-Übertragungsverfahren (TDMA= time division multiple access; CDMA = code division multiple access) übertragen. Insbesondere wird es im sogenannten TDD- Mode betrieben (TDD= time division duplex). Im TDD-Mode wird eine getrennte Signalübertragung in Up- und Downlink-Richtung (Uplink = Signalübertragung vom Mobilfunkgerät zur jeweiligen Basisstation, Downlink = Signalübertragung von der jeweilig zugeordneten Basisstation zum Mobilfunkgerät) durch eine entsprechende, separate Zuweisung von Zeitschlitzen mittels eines Zeitmultiplex- Verfahrens erreicht. Dabei wird vorzugsweise nur eine einzige Trägerfrequenz zur Signalübertragung in Up- und Downlink-Richtung verwendet. Um eine Teilnehmerseparierung vornehmen zu können, wird also vereinfacht ausgedrückt bei der Funkübertragung über die Luftschnittstelle des jeweiligen Teilnehmergeräts zur zugeordneten Basisstation (und umgekehrt) eine zeitliche Aufteilung der Nachrichtensignale in eine Vielzahl von aufeinanderfolgenden Zeitschlitzen vorgebbarer Zeitdauer mit vorgebbarer Zeitrahmenstruktur vorgenommen. Mehrere Teilnehmer, die zeitgleich in derselben Funkzelle mit der dortigen Basisstation in Kommunikation treten, werden in Kombination zur Zeitmultiplexaufteilung zweckmäßigerweise durch orthogonale Codes, insbesondere nach dem sogenannten CDMA - Verfahren (code division multiple access,) voneinander hinsichtlich ihrer Nachrichten-/Datenverbindungen separiert.

Als Teilnehmergeräte sind vorzugsweise Mobilfunktelefone, insbesondere Handys, vorgesehen. Daneben können auch sonstige Nachrichten- und/oder Datenübertragungsgeräte mit zugeordneter Funkeinheit (Sende- und/oder Empfangseinheit) wie z.B. Internet Computer, Fernsehgeräte, Notebooks, Faxgeräte, usw. zum Kommunikationsverkehr "on air", d.h. über eine Luftschnittstelle, ausgebildet und Komponenten des Funkkommunikationsnetzes sein. Die Teilnehmergeräte können dabei ggf. auch stationär, d.h. ortsfest, im Funknetz angeordnet sein. Bevorzugt sind sie aber portabel ausgebildet und können sich somit mobil, d.h. an wechselnden Orten aufhalten.

Das zellulare Mobilfunksystem MCS weist üblicherweise eine Vielzahl von Basisstationen auf, denen jeweils Mobilfunkzellen zugeordnet sind, d.h. jede Basisstation spannt jeweils eine Funkzelle auf und versorgt diese hinsichtlich des Funkverkehrs über mindestens eine Luftschnittstelle. Innerhalb einer solchen Funkzelle ist also jeweils deren Basisstation für die Kommunikation mit dem sich dort jeweilig aufhaltenden Teilnehmergerät zuständig. Vorzugsweise ist die jeweilige Basisstation annäherungsweise im Zentrum ihrer Funkzelle angeordnet.

Hier im Ausführungsbeispiel von Figur 4 sind der Übersichtlichkeit halber lediglich zwei Basisstationen NB, SB eingezeichnet, die stellvertretend für die Vielzahl von anderen, im Funknetz vorhandenen Basisstationen sind. Ein zu ortendes Teilnehmergerät UE1 befindet sich in der Funkzelle der Basisstation SB. Insbesondere ist hier das Teilnehmergerät UE1 (User Equipment) allgemein ausgedrückt ein physikalisch mobiles, d.h. portables Endgerät zur Telekommunikation. Eine Basisstation ist jeweils eine Netzwerkkomponente, die mobile Endgeräte in einer Mobilfunkzelle über mindestens eine Luftschnittstelle bedient und ggf. kontrolliert.

Die Basisstation SB ist hier in Figur 4 diejenige Netzwerkkomponente, die aktuell das zu lokalisierende mobile Endgerät UE1 in ihrer momentanen Aufenthaltsfunkzelle, d.h. einer Serving-Mobilfunkzelle, über die Luftschnittstelle LS bedient und kontrolliert. Die Basisstationen wie z.B. NB, SB sind wiederum gruppenweise zusammenfassbar und über eine Festnetzverbindung Iub mit einer übergeordneten Netzwerkeinheit SRNC (Serving Radio Network Controller) verbunden, die unter Zuhilfenahme eines Protokolls RRC (radio resource control = Protokoll zur Übertragung von Nachrichten zwischen mobilem Teilnehmergerät und Serving Radio Network Controller) den Kommunikations-/Datenverkehr zwischen dem jeweiligen mobilen Teilnehmergerät und der jeweilig zugeordneten Basisstation organisiert und kontrolliert. Ein sogenannter serving radio network controller ist also eine Netzwerkkomponente für die Bedienung und Kontrolle von einer oder mehreren Basisstationen, die in UMTS NodeBs heißen. Der jeweilige serving radio network controller sowie die ihm zugeordneten Basisstationen bilden ein sogenanntes Radio Network System (RNS).

Mehrere RNS-Systeme wiederum sind in UMTS zu einer logischen Systemeinheit UTRAN (Universal Terrestrial Radio Access Network) zusammengefasst. Die Vermittlungseinheit 3GMSC (3^{rd} Generation Mobile-services Switching Center) stellt das Interface, d.h. die Schnittstelle, zwischen dem Funksystem MSC und Festnetzen wie z.B. PLMN (public land mobile network = Öffentliches Landgestütztes Mobilnetzwerk) über eine Festverbindung Iu her. Das MSC führt dazu alle notwendigen Funktionen für Circuit Switched Services von und zu den Mobilstationen aus. Über eine Verbindungseinheit GMLC (Gateway Mobile Location Center) wird eine Kommunikationsverbindung für eine externe Location Applikation (wie z.B. Positionsbestimmung) oder einen externen Location Client (LCS-Client) ermöglicht. Diese Verbindungseinheit GMLC steht mit einem sogenannten "Home Location Register" HLR in Verbindung, dem ein Mobiler User für Protokoll- bzw. Kontrollzwecke (z.B. User Informationen) zugeordnet ist. Über die Verbindungseinheit GMLC kann eine externe Lokalisierungseinheit wie z.B. ein LCS-Client ELCS (location services)- Anwendersystem (wie z.B. Notrufzentralen, Überwachungszentralen, positionsabhängige Informationsdienste) mit dem Funkkommunikationssystem MCS in Kontakt treten.

Das Mobilfunkgerät UE1 hat im beispielhaft vorliegenden Verkehrszustand von Figur 4 eine aktive, bestehende Kommunikationsverbindung zur Basisstation SB in seiner aktuellen Aufenthalts- Funkzelle bereits aufgebaut. Somit können Nachrichtensignale bzw. Datensignale sowohl von der Basisstation SB zum Mobilfunkgerät UE1 (= downlink) als auch vom Mobilfunkgerät UE1 zur Basisstation SB (= uplink) übertragen werden. An die Basisstation SB ist mit Hilfe von Netzelementen, die in der Figur 4 der Übersichtlichkeit halber nicht eingezeichnet sind, eine Auswerte-/Recheneinheit AE (strichpunktiert gezeichnet) angeschlossen. Mit deren Hilfe wird die Positionsberechnung bzw. Positionsbestimmung (PCF= position calculating function) des Mobilfunkgeräts UE1 aufgrund von Messdaten vorgenommen. Dabei kann diese Auswerte-/Recheneinheit AE insbesondere auch Bestandteil der jeweiligen Basisstation sein und/oder im Mobilfunkgerät UE1 selbst implementiert sein.

Nach einem Mobilfunkstandard der dritten Generation wie z.B. UMTS (siehe WCDMA for UMTS - Radio Access For Third Generation Mobile Communications: *H. Holma, A. Toskala;* John Wiley & Sons, New York; ISBN 0-47172-051-8; 2000) kann eine Positionsbestimmung eines Mobilfunkgerätes mit Hilfe der Unterstützung von sogenannten Positionselementen erfolgen. Nähere Einzelheiten dazu sind in 3G TSGR1#8(99)g57: Positioning method proposal, PANASONIC, New York (USA), TSG RAN1 Meeting#8, 12.-15.10.1999, 3G TSGR2#8(99)e48: Positioning method proposal, PANASONIC, Cheju (Korea), TSG RAN2 Meeting#8, 2.-5.11.1999, sowie 3G TSGR2#15-R2-001718: Assessment procedure for the OTDOA-PE positioning method, PANASONIC, Sophia Antipolis (Frankreich), TSG RAN2 Meeting#15, 21.-25.8.2000 angegeben.

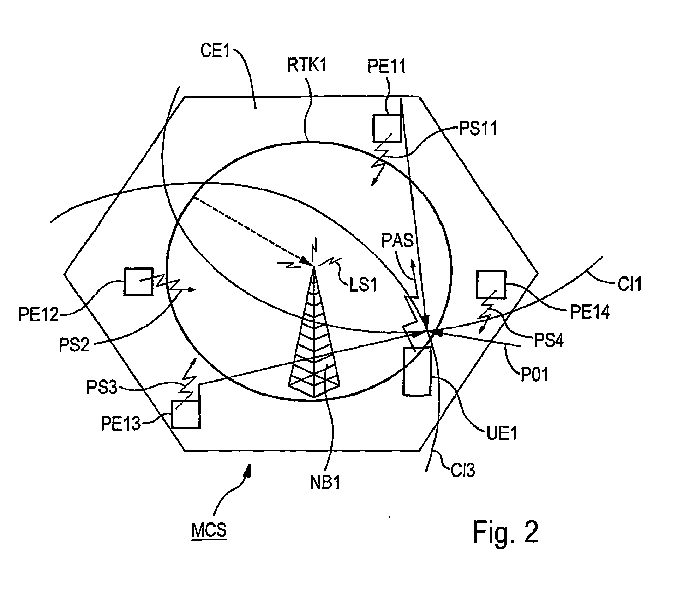

Figur 2 zeigt exemplarisch die Funkzelle CE1 aus der Vielzahl von Funkzellen des Funkkommunikationssystems nach Figur 4. Diese einzelne Funkzelle CE1 wird durch die annäherungsweise zentral angeordnete Basisstation NB1 funktechnisch versorgt. In einem zellularen Mobilfunksystem wie z.B. UMTS spannen allgemein ausgedrückt Basisstationen bzw. NodeBs zugehörige, einzeln zugeordnete Mobilfunkzellen auf. Innerhalb einer Mobilfunkzelle kann ein Teilnehmergerät eine Funkverbindung mit der Basisstation haben, die diese Zelle aufspannt. Der jeweiligen Funkzelle wie z.B. CE1 ist somit eine Vielzahl von Funkzellen benachbart, die jeweils von einer einzelnen Basisstation aufgespannt werden; in der Figur 2 sind diese der zeichnerischen Einfachheit halber weggelassen worden. Um nun die Position, d.h. örtliche Lage des sich in der Funkzelle CE1 momentan aufhaltenden Mobilfunkgeräts UE1 bestimmen zu können, sind in der jeweiligen, einzelnen Funkzelle wie z.B. CE1 selbst jeweils ein oder mehrere Positionselemente wie z.B. PE11 mit PE14 zusätzlich verteilt angeordnet. Vorzugsweise sind sie im Bereich der Außengrenzen der Funkzelle CE1 platziert. Zur Positionsermittlung des Mobilfunkgeräts UE1 sendet zum einen die Basisstation NB1 selbst über ihre Luftschnittstelle LS1 ein oder mehrere Ortungsmesssignale, deren Laufzeit für ihren Laufweg zum Mobilfunkgerät UE1 von diesem gemessen und daraus ein Distanzkreis RTK1 um die Basisstation NB1 als Mittelpunkt ermittelt wird (= sogenannte RTT-Messung (round trip time). Auf diesem Kreis RTK mit konstantem Radius liegt das Mobilfunkgerät UE1. Zur weiteren Eingrenzung dessen örtlichen Lage werden zum anderen gleichzeitig oder jeweils um eine bekannte Zeitspanne zeitversetzt ein oder mehrere Ortungsmesssignale von mindestens zwei weiteren Positionselementen wie z.B. PE1 und PE3 gesendet. Über entsprechende Laufzeitmessungen dieser Ortungsmesssignale durch das Mobilfunkgerät UE1 werden zumindest zwei weitere Distanzkreise CI1 und CI3 bestimmt. Dabei kennzeichnet der Distanzkreis CI1 diejenigen Orte, an denen ein Ortungsmesssignal des Positionselements PE1 jeweils die gleiche Laufzeit für seinen Laufweg zum Mobilfunkgerät UE1 aufweist. Der Distanzkreis CI2 beschreibt diejenigen Orte, an denen ein Ortungsmesssignal des Positionselements PE2 jeweils die gleiche Laufzeit für seinen Laufweg zum Mobilfunkgerät UE1 aufweist. Erst der Schnittpunkt aller drei Distanzkreise RTK1, CI1, CI2 gibt die örtliche Lage des Mobilfunkgeräts UE1 in eindeutiger Weise an.

Zweckmäßigerweise werden die Positionselemente PE11 mit PE14 bezüglich des Zeitrasters der Funksignalisierung auf der Luftschnittstelle LS1 der Basisstation NB1 synchronisiert. Denn dadurch ist der Startzeitpunkt der Ortungsmesssignale der Positionselemente in eindeutiger Weise festgelegt, was die Auswertung der Laufzeiten der Ortungsmesssignale erleichtert.

Anstelle der Distanzkreise RTK1, CI1, CI3 und/oder in Kombination mit diesen können aufgrund der Laufzeiten der Ortungsmesssignale - wie bei der sogenannten OTDOA-Methode (observed time of arrival) - auch Ortshyperbeln bestimmt werden. Nähere Angaben zu dieser bekannten OTDOA- Positionselement-Meßmethode (OTDOA=observed time difference of arrival) finden sich in 3G TSGR1#8(99)g57: Positioning method proposal, PANASONIC, New York (USA), TSG RAN1 Meeting#8, 12.-15.10.1999, 3G TSGR2#8(99)e48: Positioning method proposal, PANASONIC, Cheju (Korea), TSG RAN2 Meeting#8, 2.-5.11.1999, 3G TSGR2#15-R2-001718: Assessment procedure for the OTDOA-PE positioning method, PANASONIC, Sophia Antipolis (Frankreich), TSG RAN2 Meeting#15, 21.-25.8.2000. Die Positionsbestimmung entsprechend der OTDOA-Methode basiert insbesondere auf Messungen von Signalen der Luftschnittstelle zwischen mehreren Basisstationen (NodeBs) und/oder Positionselementen in der jeweiligen Aufenthaltsfunkzelle und dem jeweilig zu lokalisierenden Teilnehmergerät. Gemäß dieser Methode versucht das zu lokalisierende Teilnehmergerät, mindestens ein Paar eines bekannten Signals z.B. von zwei ortsverschiedenen, benachbarten Basisstationen und/oder Positionselementen innerhalb der jeweiligen Aufenthaltsfunkzelle zu detektieren. Die Empfangszeitpunkte des Signals von zwei ortsverschiedenen, benachbarten NodeBs und/oder Positionselementen derselben Aufenthaltsfunkzelle werden dann zur Auswertung zweckmäßigerweise an die zuständige Auswerteeinheit PCF (position calculation function) derjenigen Basisstation (Serving NodeB) gesendet, welche für das zu lokalisierende Teilnehmergerät verantwortlich ist. Auswerten heißt, dass die PCF die Differenz der Empfangszeiten ΔT bildet. Dieses ΔT beschreibt einen Hyperboloid, der angibt, dass der Aufenthaltsort des zu ortenden Teilnehmergeräts auf einer Hyperbel liegt (siehe Taschenbuch der Mathematik: *I.N. Bonstein, K.A. Semendjajew, G. Musiol, H. Muhlig;* Verlag Harri Deutsch; 4. Auflage; 1999). Durch die Einbeziehung mindestens einer weiteren benachbarten Basisstation und/oder eines weiteren Positionselements derselben Aufenthaltsfunkzelle befindet sich dann der Aufenthaltsort des gesuchten Teilnehmergeräts an einem der beiden Schnittpunkte von zwei Hyperbeln. Für eine eindeutige Positionsbestimmung ist noch eine weitere Information nötig. So kann entweder:
a) eine OTDOA-Messung zu einer vierten NodeB und/oder zu einem weiteren Positionselement derselben Aufenthaltsfunkzelle bestimmt werden (ergibt eine dritte Hyperbel), und/oder
b) in Zellen mit Sektorisierung die Information über den Sektor, in der sich das Teilnehmergerät befindet, zur Entscheidung herangezogen werden, und/oder
c) eine RTT-Messung durchgeführt werden.

Das jeweilig zu detektierende Ortungsmesssignal kann das Signal des sogenannten CPICH (common pilot channel) sein (im folgenden wird zur Vereinfachung vom CPICH ausgegangen), welches kontinuierlich von den NodeBs gesendet wird. Zur Unterscheidung der CPICH-Signale ist zweckmäßigerweise jeder NodeB und/oder jedem Positionselement ein anderer Spreizungscode zugeordnet. Somit ist es dann möglich, die empfangenen CPICH-Signale auseinanderzuhalten, den entsprechenden NodeBs bzw. Positionselementen zuzuordnen, sowie die erforderlichen Zeitdifferenzen zu berechnen.

Einfluss auf die Positionsberechnung hat auch die Synchronisation der NodeBs zueinander. Dabei wird der PCF zweckmäßigerweise mitgeteilt, ob die NodeBs synchronisiert sind. Wenn nicht, ist es vorteilhaft, den benachbarten Basisstationen mitzuteilen, welche zeitliche Verschiebung zwischen den einzelnen NodeBs existiert. Eventuelle zeitliche Verschiebungen hinsichtlich der Sendezeitpunkte können dann zur korrekten Berechnung einkalkuliert werden. Hintergrund dafür ist, dass für die Positionsberechnung somit unterstellt werden kann, dass die Ortungsmesssignale von den verschiedenen Basisstationen etwa zum gleichen Zeitpunkt im Netz abgesendet worden sind. Mit der OTDOA Methode erreicht man vorzugsweise eine Genauigkeit in der Positionsbestimmung des UE von ca. 80 - 100 m.

In Erweiterung der OTDOA-Methode für den Fall, dass die Signale der die UE bedienenden NodeB die Ortungsmesssignale der anderen NodeBs überdecken, werden bei der sogenannten OTDOA-IPDL-Methode (obeserved time difference of arrival-idle period downlink) die Übertragungen der NodeB (welche die zu lokalisierende UE bedient - Serving NodeB genannt) für kurze Zeitperioden, IPDLs, ausgeschaltet. Ansonsten wäre nämlich eine Detektion des jeweiligen CPICH-Signals anderer NodeBs erschwert und sogar in weiten Teilen der Mobilfunkzelle unmöglich. Diese zusätzlich eingefügten Ruhepausen hinsichtlich der Übertragungen dieser NodeB können dann von der UE genutzt werden, um die Empfangszeitpunkte der CPICH-Signale der Nachbar-NodeBs zu detektieren. Diese Pause - Idle Period - kann mehrere Symbole lang sein, in der Regel 5-10 Symbole. Dabei entspricht die Länge eines Symbols z.B. im FDD-Mode von UMTS 256 chips und im TDD-Mode max. 16 chips, wobei 1 chip ca. 0.26 µs lang ist (bei einer Chipfrequenz von 3.84 Mchips/s). Aufgrund der Einführung der IPDLs und somit Abschaltung der Übertragung'von Signalen der interessierenden NodeB tritt für die Zeit der IPDLs natürlich ein Kapazitätsverlust bzw. Informationsverlust in der entsprechenden Mobilfunkzelle auf. Mit der OTDOA-IPDL Methode erreicht man eine Genauigkeit in der Positionsbestimmung bis zu ca. 20 m. In entsprechender Weise wird zweckmäßigerweise auch vorgegangen, wenn Positionselemente in der jeweiligen, aktuellen Aufenthaltsfunkzelle zusätzlich verwendet werden.

Die Anzahl der Positions-Elemente wird vom Netzbetreiber entsprechend den örtlichen Gegebenheiten der jeweiligen Mobilfunkzelle und der geforderten Genauigkeit der Positionsbestimmung für jede einzelne Funkzelle festgelegt. Mit der bisherigen Ortungsmethode ist es mit den PEs lediglich möglich, zur Positionsbestimmung die Signale einzig nur derjenigen Mobilfunkzelle zu nutzen, in der sich das zu bestimmende Mobilfunkgerät aktuell befindet. Signale anderer NodeBs (in den benachbarten Mobilfunkzellen) für die OTDOA-Auswertung sind grundsätzlich nicht mehr nötig, können natürlich bei Vorhandensein und Detektion trotzdem verwendet werden. Die Einführung von IPDLs ist nicht mehr zwingend notwendig, was den in der OTDOA-IPDL-Methode (siehe oben) erwähnten Kapazitätsverlust der Zelle vermeidet. Theoretisch können IPDLs in diesem Verfahren sicherlich auch Genauigkeiten weiter erhöhen.
Die PEs haben zwei Hauptaufgaben:
a) Sie hören auf den Mobilfunkzellverkehr im DL (down-link), d.h. auf die Übertragung von der NodeB zu den UEs.
b) Sie senden jeweils einen vordefinierten, jedem PE zugeordneten Signalcode zu den UEs im DL.
   Das Hören und Senden erfolgt jeweils auf einer Frequenz, der Downlink-Frequenz der Mobilfunkzelle (Serving-Cell) - gemeint ist z.B. die Frequenz des Broadcast-Channels BCH. Beide Vorgänge, Hören und Senden, sind jedoch zeitlich voneinander getrennt, so dass es zu keiner Überlappung kommen kann und soll.

Liegt eine Anforderung auf eine Positionsbestimmung eines Teilnehmergeräts (UE) in einer Zelle vor, so werden die in der Mobilfunkzelle jeweilig vorhandenen PEs von der Serving NodeB informiert (via höherer Signalisierungsschichten oder über den BCH), ihren zugeordneten Signalcode in einem bestimmten Downlink-Slot (DL-Slots) zu senden. Das Senden erfolgt zu bestimmten Zeiten und in bestimmten, freien Signalabschnitten des DL-Slots des Übertragungssignals der Serving NodeB zu den UEs, d.h. die PEs platzieren ihre eindeutigen Signalcodefolgen in durch die Serving NodeB vorgegebenen Signalabschnitten der Signalisierung der Serving NodeB zu den UEs dieser Mobilfunkzelle (siehe PS1 in Bild 5). Z.B. können dies Signalabschnitte des BCH sein, die dieser nicht nutzt oder Signalabschnitte im Datenteil wie z.B. DA1 eines Slots (Zeitschlitz) wie z.B. SLi. Die zu lokalisierende UE weiß vorzugsweise natürlich auch von den Signalabschnitten, in denen die PEs ihre Signalcodes senden. So kann das UE entsprechend dem Signalisierungstiming versuchen, die Signalcodes der PEs in diesem bestimmten Teil des DL-Slots zu detektieren und dabei die Ankunftszeiten der Signalcodes zu bestimmen. Die weitere Verfahrensweise und Bestimmung der Position erfolgt entsprechend dem oben angegebenen OTDOA-Verfahren nach Figur 2 und 4.

Zusammenfassend betrachtet ist Kern dieser bekannten Positionsbestimmungsmethode, dass pro Mobilfunkzelle ein oder mehrere Positions-Elemente (PE) eingeführt werden, mit deren Unterstützung Positionsbestimmungen nach dem Prinzip der OTDOA-Methode durchgeführt werden können. Die Anzahl der Positionselemente wird vom Netzbetreiber vorzugsweise entsprechend den örtlichen Gegebenheiten (wie z.B. Topographie) der jeweiligen Mobilfunkzelle und der geforderten Genauigkeit der Positionsbestimmung festgelegt.

Mit den PEs ist es möglich, zur Positionsbestimmung die Signale einzig nur derjenigen Mobilfunkzelle zu nutzen, in der das zu bestimmende UE sich befindet. Signale anderer NodeBs (in den benachbarten Mobilfunkzellen) für die OTDOA-Auswertung sind grundsätzlich nicht mehr nötig. Sie können aber natürlich bei Vorhandensein und Detektion trotzdem verwendet werden.

Bei vorstehend beschriebener PE-Methode können PEs in jeder Mobilfunkzelle eingefügt werden. Die Entscheidung liegt dabei beim Mobilfunknetzbetreiber (Operator). Dabei sind verschiedene Punkte zu beachten:
- Anzahl der PEs hinsichtlich Kosten:
   a) PEs sind entsprechend ihrer Funktionsweise als "abgespeckte" oder sehr einfache Mobilfunkgeräte mit den Mindestfunktionen Hören auf einer Frequenz und Senden eines festen Signalcodes in den Mobilfunkraum auf einer Frequenz zu sehen.
   b) Trotz "Abspeckung" (reduzierter Funktionalität) haben die PEs bestimmte Kosten (Anschaffung, Energieverbrauch, Standort)
- Einsatz als Ergänzung zu den NodeBs zur Abdeckung nur spezieller Gebiete mit den PEs, damit eventuell nicht in jeder Mobilfunkzelle PEs vorhanden sind, sondern nur in speziellen Gebieten, z.B.:
   - Indoor-Bereiche
   - "Häuserschluchten"
   - bergige Landschaften
- geographische und/oder damit rechtliche Gegebenheiten in der Mobilfunkzelle, z.B.:
   - eventuelles Verbot des Aufstellens von PEs.

Eine weitere Problematik sind die eventuellen, wenn auch nicht bewiesenen, Gesundheitsrisiken von Mobilfunkwellen in stark bewohnten Gebieten o.ä.. Aus all den genannten Gründen ist es annehmbar bzw. vorstellbar, dass nicht in jeder Mobilfunkzelle PEs des zellularen Funkkommunikationsnetzes vorhanden sein werden. Dies könnte sich dann negativ hinsichtlich der Positionsbestimmung einer oder mehrere UEs und deren Genauigkeit in diesen positionselementfreien Mobilfunkzellen auswirken.

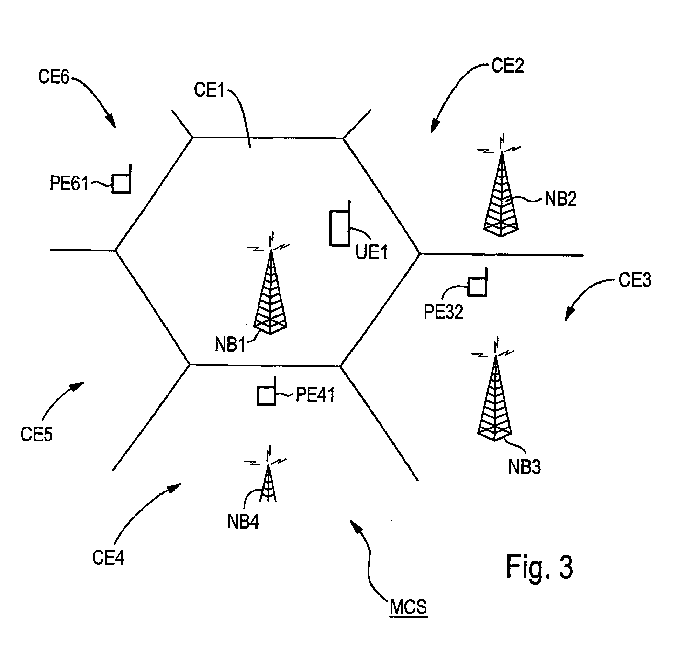

Trotz dieser Gegebenheiten, d.h. Mischung von Funkzellen mit und ohne zusätzlichen Positionselementen ist es möglich, die Positionsbestimmung eines Teilnehmergeräts flächendeckend durchzuführen, indem in denjenigen Funkzellen, in denen keine oder zu wenige Positionselemente vorhanden sind, die Ortungsmesssignale von ein oder mehreren Positionselementen in Nachbarfunkzellen zur Auswertung herangezogen werden. Mit anderen Worten heißt das, dass PE-Elemente in Funkzellen benutzt werden, die der momentanen Aufenthaltsfunkzelle des jeweilig zu lokalisierenden Teilnehmergeräts benachbart sind, (aber ohne oder unzureichender Unterstützung von Positions-Elementen in der aktuellen Aufenthaltsfunkzelle (Serving-Cell), in der das zu lokalisierende UE sich befindet (siehe Figuren 1 und 3)). Für den eben erwähnten Fall des Nichtvorhandenseins von PEs oder der Unterversorgung mit PEs in der jeweiligen Serving Cell werden also in einer oder mehreren Nachbarzellen ein oder mehrere PEs stationiert und deren Ortungsmesssignale für die Positionsbestimmung verwendet, und dadurch solche Versorgungslücken geschlossen.

Da die Zuordnung der maximal 240 Signalcodes (insbesondere können die 240 ungenutzten S-SCH Codes (=secondarysynchronization channels; in UMTS werden von 256 bereitgestellte Kanälen nur 16 allokiert und genutzt) zu entsprechenden PEs des Mobilfunknetzes den UEs im voraus durch den BCH bekannt ist (gesendet durch die NodeBs oder den höheren Signalisierungsschichten beim z.B. ersten Funkkontakt = Einloggen), ist es den UEs in der Serving Cell möglich, auf die Signalcodes der PEs aus den Nachbarzellen zu hören.

Quintessenz: Der Kern der Lösung der obigen Probleme ist insbesondere die Nutzung von Positions-Elementen der Nachbarzellen in der Serving-Cell, vorzugsweise durch die ihnen zugeordneten, im voraus bekannten eindeutigen Signalcodes zur Positionsbestimmung von UEs in der Serving Cell. Die Positionsbestimmung kann dabei in vorteilhafter Weise entsprechend der OTDOA-Methode erfolgen.

Auf diese Weise können zum einen aufgrund einer geringeren Anzahl von benötigten Positions-Elementen im Funkkommunikationsnetz Kosten der Netzbetreiber gesenkt werden. Abstriche an die Verfügbarkeit und Genauigkeit der Positionsbestimmung sind dabei weitgehend vermieden. Ein weiterer Vorteil ist, dass Ausfallzeiten von PEs, egal welcher Art, in der Serving-Cell mit PEs in den Nachbarmobilfunkzellen kompensiert werden können. Positionsberechnungen sind somit weiterhin möglich. Ein Hauptvorteil ist insbesondere ferner die effektivere Planung der Standorte der PEs. Damit verbunden sind die schon erwähnten Einsparungen von PEs im gesamten Netzwerk. Die Standorte der PEs können in vorteilhafter Weise so gewählt werden, dass in der einen Mobilfunkzelle die PEs mehr am Zellenrand liegen und in den Nachbarzellen mehr in Richtung NodeB oder mehr zu den Örtlichkeiten, die Probleme hinsichtlich der geographischen Gegebenheiten bereiten (siehe Figur 3). Mit der Nutzung von PEs aus den Nachbarmobilfunkzellen ist es zudem Vorteilhafterweise möglich, geographische, rechtliche oder gesundheitliche Probleme bezüglich des Aufstellens von PEs in einigen Mobilfunkzellen zu umgehen, zu entkräften oder zu schwächen.

Der Verzicht auf IPDLs (wie bei der OTDOA-IPDL-Methode) ist mit der vorliegenden Methode möglich. Damit kann der Kapazitätsverlust durch eventuelle IPDLs umgangen werden. Dadurch gelingt es dem Netzbetreiber, seine Zielkapazität zu erreichen, selbst mit dem Feature "Positionsbestimmungen von UEs".

### Ausführungsbeispiel 1:

Im ersten Ausführungsbeispiel dient Figur 1 als Grundlage der Erläuterungen. Es wird davon ausgegangen, dass exemplarisch vier Basisstationen, NB1, NB2, NB3 und NB4 die UMTS-Mobilfunkzellen CE1, CE2, CE3 und CE4 aufspannen. Weitere Nachbarzellen sollen im ersten Ausführungsbeispiel der Übersichtlichkeit halber keine Rolle spielen. Diese NodeBs werden durch ein RNC kontrolliert und bedient und ergeben somit ein System mit Kontrollorgan, Basisstationen, Mobilfunkgerät und Positionselementen (das RNC ist die übergeordnete Kontrolleinheit für eine bestimmte Anzahl von NodeBs und in der Figur 1 nicht explizit angegeben).
Weiterhin wird angenommen, dass sich ein zu lokalisierendes Mobilfunkgerät UE1 in der UMTS-Mobilfunkzelle CE1, der Serving-Cell, befindet und von dieser Basisstation bzw. NodeB NB1 versorgt bzw. bedient wird. Dabei ist es nicht relevant, ob die Anfrage zur Positionsbestimmung vom Mobilfunkgerät UE1, oder vom Netzwerk und somit von irgendeinem anfragenden Client im Netzwerk ausgeht.
Die gezeichnete in Figur 1 sichtbare, 6-Eck-Mobilfunkzelle stellt eine Abstraktion zur besseren Vorstellung der Anordnung einer Mobilfunkzelle und deren Elemente dar.

Des weiteren befinden sich eine gewisse Anzahl PEs in den benachbarten Mobilfunkzellen CE2, CE3 und CE4, während in der aktuellen Aufenthaltsfunkzelle (serving cell) CE1 selbst keine Positionselemente positioniert sind. Im Detail sind die zusätzlichen Positionselemente PE21, PE22 in der Nachbarfunkzelle CE2, die Positionselemente PE31, PE32 in der Nachbarfunkzelle CE3, und die Positionselemente PE41, PE42 in der Nachbarfunkzelle CE4 angeordnet. Die PE-Verteilung in den Mobilfunkzellen CE2, CE3 und CE4 wird derart vorgenommen, dass die Ortungsmesssignale der PEs dieser Nachbarfunkzellen, in diesem Beispiel die UMTS-Mobilfunkzellen CE2, CE3 und CE4, in der Serving-Cell vom zu ortenden Teilnehmergerät UE1 gut zu "hören", d.h. detektieren, sind. Im allgemeinen bedeutet dies, dass die PEs zweckmäßigerweise in der Zellgrenznähe nahe der Serving-Cell stationiert werden. Dabei wird die Verteilung vorzugsweise so gestaltet, dass die Ortungsmesssignale aller PEs in Summe die aktuelle UMTS-Aufenthalts-Mobilfunkzelle CE1 möglichst zu 100% abdecken.

Befindet sich beispielsweise das zu lokalisierende Teilnehmergerät UE1 in der Mobilfunkzelle CE1 nahe deren oberer linken Ecke, so besteht die Möglichkeit, dass das Teilnehmergerät UE1 bei einer Positionsanfrage Messsignale der Positionselemente PE21 und PE42 auswerten kann. Hingegen werden und können Probleme hinsichtlich der Detektion der Ortungsmesssignale der anderen PEs (PE31, PE32, PE41) auftreten, weil diese PEs vom zu lokalisierenden Teilnehmergerät UE1 schlecht oder gar nicht zu detektieren sind. Gründe sind die größeren Entfernungen, dadurch schwächere Signalleistungen und eventuelle quantitativ mehr Abschattungen in der Entfernung zwischen diesen PEs und dem Teilnehmergerät UE1.

Befindet sich das Teilnehmergerät UE1 gemäß Figur 1 etwa in der Mitte der rechten Zellhälfte der UMTS-Mobilfunkzelle CE1, so ist es diesem möglich, die Signalcodefolgen der Positionselemente PE21, PE31, PE32 und PE42 der Nachbarfunkzellen CE2, CE3, CE4 gut bis sehr gut zu detektieren, während das Positionselement PE42 für einen ausreichend guten Empfang bereits zu weit weg liegt. Ein Ablauf-Szenario für die Positionsbestimmung des Teilnehmergeräts UE1 könnte exemplarisch insbesondere folgendermaßen aussehen:

Die Position des Teilnehmergeräts UE1 in der UMTS-Mobilfunkzelle CE1 soll bestimmt werden; dabei ist es nicht relevant, warum und woher eine Positionsanfrage kam. Aufgrund der in der Anforderungen definierten Genauigkeit der Positionsbestimmung, wird vom RNC (radio network controller) entschieden, Positionselemente (PEs) einzusetzen. Darauffolgend wird von diesem die Basisstation NB1 der Aufenthaltsfunkzelle CE1 informiert. Diese informiert die PEs der Nachbarmobilfunkzellen CE2, CE3 und CE4 über den BCH über die Positionsanfrage und die Zeitpunkte, wann das jeweilige Positionselement seine ihm zugeordnete Signalcodefolge in die DL-Slotstruktur von der NodeB NB1 zum Teilnehmergerät UE1 einfügt. Dass die Positionselemente (PEs) in den Nachbarzellen diese Informationen bekommen, wird erstens dadurch sichergestellt, dass sich die PEs in der Zellgrenznähe der UMTS-Mobilfunkzelle CE1 befinden und so den DL -Verkehr mitbekommen. Und zum Zweiten wird durch den RNC sichergestellt, dass auch die Nachbar-NodeBs diese Informationen in ihren DL- Verkehr einbinden. Diese Information bekommt auch das Teilnehmergerät UE1 mitgeteilt, da auch dieses die DL- Verbindung der Serving-NodeB NB1 hört. Zu den gegebenen Zeitpunkten fügen nun die Positionselemente PE21, PE31, PE32 und PE41 ihre Signalcodefolgen in die jeweilige DL-Slotstruktur ein. Das Teilnehmergerät UE1 versucht nun mit dem Wissen der Signalcodefolgen und des dazugehörigem Positionselements (durch z.B. einen Rake-Empfänger, d.h. Korrelationsempfänger, mit dem Zeitverschiebungen durch Korrelationen ermittelt werden können) Empfangszeiten der Codefolgen zu bestimmen. Diese Informationen sendet das Teilnehmergerät UE1 an die Serving-NodeB NB1. Die NodeB NB1 bestimmt dann daraus Zeitdifferenzen zwischen den Empfangszeitpunkten der PE-Signalcodefolgen. Diese Differenzen werden auf Hyperbeln entsprechend der OTDOA-Methode abgebildet; der gemeinsame Schnittpunkt der Hyperbeln ist die gesuchte Position in einem von der Umgebung abhängigen Genauigkeitswertebereich.

### Ausführungsbeispiel 2:

Ausführungsbeispiel 2 bezieht sich voll und ganz auf das obige Ausführungsbeispiel 1 und auf Figur 3 . Der Unterschied liegt in der Erweiterung auf 6 UMTS-Mobilfunkzellen (CE1 mit CE6), sowie der geänderten Anzahl von PEs und deren Anordnung. Es sind jetzt drei Positionselemente vorhanden: PE32 in UMTS-Mobilfunkzelle CE3, PE41 in UMTS-Mobilfunkzelle CE4 und PE61 in UMTS-Mobilfunkzelle CE6. Es befinden sich keine Positionselemente in den UMTS-Mobilfunkzellen CE2 und CE5, sowie der UMTS-Aufenthaltsfunkzelle CE1. Dabei soll folgendes gelten:
- die Positionselemente PE61 (in UMTS-Funkzelle CE6), PE41 (in UMTS Funkzelle CE4) und PE32 (in UMTS Funkzelle CE3) decken gemeinsam die UMTS Cell CE1 funktechnisch ab;
- die Positionselemente PE61 (in UMTS- Funkzelle CE6), PE41 (in UMTS Funkzelle CE4) und PE32 (in UMTS Funkzelle CE3) decken jeweils auch ihre eigene Mobilfunkzelle zu gewissen Teilen ab;
- das Positionselement PE61 (in UMTS- Funkzelle CE6) deckt zudem den oberen Teil der UMTS Funkzelle CE5 ab;
- das Positionselement PE41 (in UMTS- Funkzelle CE4) deckt zudem den unteren Teil von UMTS Funkzelle CE3 und UMTS Funkzelle CE5 ab;
- das Positionselement PE31 (in UMTS- Funkzelle 3) deckt zudem den unteren Teil von UMTS Funkzelle CE2 ab;

Die Bestimmung der Position des Teilnehmergeräts UE1 erfolgt analog den Beschreibungen im Ausführungsbeispiel 1. Ausführungsbeispiel 2 soll insbesondere verdeutlichen, dass eine andere Anzahl und Anordnung der Positionselemente (PEs) keinen grundsätzlichen Unterschied zur Auswirkung hat.

### Ausführungsbeispiel 3:

Ausführungsbeispiel 3 bezieht sich voll und ganz auf die 2 vorherigen Ausführungsbeispiele 1 und 2. Der Unterschied bzw. die Erweiterung liegt in der Verwendung bzw. Einführung von Ruhezeiten im DL -Verkehr der NodeB NB1 zum zu lokalisierenden Teilnehmergerät UE1. Konkret heißt dies: damit die Signalcodefolgen der PEs der UMTS-Mobilfunknachbarzellen (CE2 mit CE6 in Figur 3) weitgehend ohne etwaig störende Einflüsse der NodeB NB1 detektiert werden können, wird die DL-Übertragung von der NodeB NB1 zum Teilnehmergerät UE1 für eine gewisse Zeitperiode, sogenannten Idle Periods, ausgeschaltet. Genau in dieser Idle Period senden dann alle entsprechenden PEs ihre Signalcodefolgen. Die Information über die Idle Period erfolgt ebenfalls über den BCH-Kanal. Damit erhöht sich die Wahrscheinlichkeit des zu ortenden Teilnehmergeräts UE1, die entsprechenden PEs möglichst komplett, d.h. möglichst zu 100% zu detektieren und unter Umständen zusätzlich Signale anderer, weiter entfernter PEs ebenfalls zu detektieren. Das Ergebnis wäre eine qualitativ bessere Positionsbestimmung.

Figur 5 zeigt in schematischer Darstellung die zeitliche Struktur eines Zeitrahmens FRi der Funksignalisierung auf der Luftschnittstelle LS1 zwischen der Basisstation NB1 und dem zu ortenden Mobilfunkgerät UE1 von Figur 1. Dabei ist in einen freien Signalabschnitt eines Zeitschlitzes dieses Zeitrahmens ein Ortungsmesssignal von einem mithörenden Positionselement in einem der benachbarten Funkzellen nach dem erfindungsgemäßen Verfahren durch selbständige Auswahl oder durch festgelegte Vorabzuordnung eingefügt worden. Der Zeitrahmen FRi der zeitlichen Länge TF weist eine Vielzahl von einzelnen, zeitlich nacheinanderfolgenden Zeitschlitzen SL0 mit SL14 von jeweils derselben, konstanten Zeitdauer auf. Solche Zeitrahmen folgen dabei sukzessive, d.h. fortlaufend bei der Nachrichtenübertragung aufeinander. Dies ist in der Figur 5 durch jeweils drei Punkte am Anfang und Ende des Zeitrahmens FRi angedeutet. Die Struktur des Zeitrahmens FRi entspricht vorzugsweise der slot-Struktur eines sogenannten TDD-Frames (TDD = Time Division Duplex, frame= Zeitrahmen). Ein TDD- Frame wie zum Beispiel FRi besteht dabei vorzugsweise insgesamt aus 15 Zeitschlitzen (= time slots) SL0 mit SL14. Dabei kann jeder Zeitschlitz eindeutig entweder für Übertragungen im Uplink- oder Downlinkverkehr allokiert, d.h. reserviert bzw. bereitgestellt sein.

In Figur 5 ist schematisch der zeitliche Aufbau bzw. die Struktur, d.h. die zeitliche Unterteilung eines Zeitschlitzes (= time slot) wie z.B. SLi des Zeitrahmens FRi dargestellt. Der jeweilige Zeitschlitz wie z.B. SLi weist 4 Zeitabschnitte bzw. Zeitsektionen DA1, MI, DA2, PC2 auf, die für die Übertragung von verschiedene Gruppen von Signaltypen reserviert sind. Der erste Zeitabschnitt DA1 des Zeitschlitzes SLi ist für die Übertragung von Nutzdaten, sogenannten data symbols, vorbelegt. Danach werden im zweiten, nachfolgenden Zeitabschnitt bzw. -block MI sogenannte Midambles übertragen. Dies sind Signale für die Kanalschätzung und/oder Synchronisation des jeweiligen Teilnehmergeräts und/oder der jeweiligen Basisstation. Aufgrund dieser Kanalschätzparameter wird insbesondere eine Kanalentzerrung im jeweiligen Mobilfunkgerät und/oder der jeweiligen Basisstation durchgeführt. Nach diesem zeitblock MI folgt wiederum ein Zeitabschnitt DA2 für eine weitere Übertragung von Nutzdaten. Dadurch, dass die Midambles für die Kanalschätzung zwischen den beiden Blöcken mit den Nutzdaten bzw.- Nutzsignalen übertragen werden, wird weitgehend sichergestellt, dass der jeweilige Funkkanal optimal im Zeitmittel entzerrt werden kann. Während des vierten, letzten Zeitabschnitts PC2 des Zeitschlitzes SLi wird schließlich keine Signalübertragung vorgenommen, d.h. diese sogenannte guard period ist unbelegt, um eine Sicherheitszeitlücke zwischen den einzelnen, zweitliche nacheinander übertragenen Zeitschlitzen zu haben. Dadurch werden insbesondere störende Signalüberlagerungen bzw. Interferenzen aufeinanderfolgender slots durch Signallaufzeitunterschiede wie z.B. bei Mehrwegeausbreitung weitgehend vermieden, so dass eine einwandfreie Signaldetektion weitgehend sichergestellt ist. Insgesamt betrachtet kann also während des jeweiligen Zeitschlitzes die Funkübertragung eines sogenannten Bursts (Datenbüschels) mit vorgegebener zeitlicher Aufteilung bzw. Sektionierung erfolgen. Detaillierte Angaben zur Zeitrahmen- und Zeitschlitzstruktur sind im jeweiligen Mobilfunkstandard, hier im Ausführungsbeispiel insbesondere im UMTS- Standard gemacht.(z.B. 3G TS 25.221 "physical channels and mapping of transport channels onto physical channels (TDD)", Version 3.2.0 (2000-03), 3G TS 25.305 "stage 2 functional specification of location services in UTRAN", Version 3.1.0 (2000-03, 3G TS 25.224 "physical layer procedures (TDD)", Version 3.2.0 (2000-03).)

Hier im Ausführungsbeispiel wird beispielhaft der Signalisierungscode PS1 eines der Positionselemente wie z.B. PE11 während des Zeitabschnitts DA1 im Zeitschlitz SLi des Zeitrahmens FRi übertragen, da hier ein freier Signalabschnitt zur Verfügung stand.

Das an Hand eines UMTS- Funkkommunikationssystems beispielhaft beschriebene Lokalisierungsverfahren ist selbstverständlich auch bei anderen Funkkommunikationssystemen wie z.B. nach dem GPRS- (general packet radio service), EDGE-(enhanced data rates for GSM environments) Standard anwendbar.

## Patentansprüche

1. Verfahren zur Positionsbestimmung (PO1) mindestens eines Teilnehmergeräts (UE1) eines Funkkommunikationssystems (MCS), das eine Vielzahl von Basisstationen (NB1 mit NB4) zur Aufteilung in Funkzellen (CE1 mit CE4) aufweist, wobei von jeder Basisstation (NB1) jeweils eine Funkzelle (CE1) aufgespannt und diese hinsichtlich des Funkverkehrs über mindestens eine Luftschnittstelle (LS1) versorgt wird, wobei mindestens ein Ortungsmesssignal (PS21, PS31, PS32, PS41) von mindestens einem zusätzlichen Positionselement (PE21, PE31, PE32, PE41, PE42) gesendet wird,
**dadurch gekennzeichnet,**
**dass** bei einer Mischung von Funkzellen (CE1 mit CE4) mit und ohne zusätzlichen Positionselementen (PE21, PE31, PE32, PE41, PE42) mindestens ein Ortungsmesssignal (PS21) von mindestens einem Positionselement (PE21) aus mindestens einer Funkzelle (CE2) gesendet wird, die der Aufenthaltsfunkzelle (CE1) des jeweilig zu ortenden Teilnehmergeräts (UE1) benachbart ist, in der kein Positionselement oder zu wenige Positionselemente vorhanden sind, und wobei dieses Ortungsmesssignal (PS21) zur Positionsbestimmung des Teilnehmergeräts (UE1) in dessen momentaner Aufenthaltsfunkzelle (CE1), in der kein Positionselement oder zu wenige Positionselemente vorhanden sind, herangezogen wird.

2. Verfahren nach Anspruch 1,
**dadurch gekennzeichnet,**
**dass** die Signalisierung auf der Luftschnittstelle (LS1) der Basisstation (NB1) der jeweiligen Funkzelle (CE1) nach einem Zeitmultiplexverfahren, insbesondere nach dem TDD-Mode (time division duplex) des UMTS- Standards (universal mobile telecommunication system), durchgeführt wird.

3. Verfahren nach einem der vorhergehenden Ansprüche,
**dadurch gekennzeichnet,**
**dass** dem Ortungsmesssignal (PS21) des jeweiligen Positionselements (PE21) ein eindeutiger Identifizierungscode zugeordnet wird.

4. Verfahren nach einem der vorhergehenden Ansprüche,
**dadurch gekennzeichnet,**
**dass** als Teilnehmergerät (UE1) ein Mobilfunkgerät, insbesondere Mobilfunktelefon, verwendet wird.

5. Verfahren nach einem der vorhergehenden Ansprüche,
**dadurch gekennzeichnet,**
**dass** das Ortungsmesssignal (PS21) vom jeweiligen Positionselement (PE21) während mindestens eines unbelegten, bereits vorhandenen Signalabschnitts (DA1) im Signalisierungsverkehr der Basisstation (NB2) seiner zugeordneten Funkzelle (CE1) und/oder der Basisstation (NB1) der Aufenthaltsfunkzelle (CE1) des zu ortenden Mobilfunkgeräts (UE1) gesendet wird.

6. Verfahren nach einem der Ansprüche 1 bis 4, **dadurch gekennzeichnet,**
**dass** das Ortungsmesssignal (PS21) vom jeweiligen Positionselement (PE21) während einer eigens eingefügten Ruhezeit im Signalisierungsverkehr der Basisstation (NB2) seiner zugeordneten Funkzelle (CE1) und/oder der Basisstation (NB1) der Aufenthaltsfunkzelle (CE1) des zu ortenden Teilnehmergeräts (UE1) gesendet wird.

7. Verfahren nach einem der vorhergehenden Ansprüche,
**dadurch gekennzeichnet,**
**dass** für die Positionsbestimmung eines zu ortenden Teilnehmergeräts (UE1) Ortungsmesssignale von mindestens zwei, insbesondere von drei, Positionselementen (PE21, PE31) herangezogen werden.

8. Verfahren nach einem der vorhergehenden Ansprüche,
**dadurch gekennzeichnet,**
**dass** die Positionselemente (PE31, PE32) bezüglich des Zeitrasters der Funksignalisierung auf der Luftschnittstelle (LS1) der Basisstation (NB1) der Aufenthaltsfunkzelle (CE1) des jeweilig zu ortenden Teilnehmergeräts (UE1) synchronisiert werden.

9. Verfahren nach einem der vorhergehenden Ansprüche,
**dadurch gekennzeichnet,**
**dass** die Laufzeit des jeweiligen Ortungsmesssignals (PS21, PS31, PS32, PS41, PS42) für dessen Laufweg zwischen seinem Positionselement (PE21, PE31, PE32, PE41, PE42) und dem jeweilig zu lokalisierenden Teilnehmergerät (UE1) ermittelt und zur Auswertung bereitgestellt wird.

10. Vorrichtung zur Positionsbestimmung mindestens eines Teilnehmergeräts (UE1) eines Funkkommunikationssystems (MCS) mit Hilfe einer Auswerte-/Recheneinheit (AE), wobei dieses Funkkommunikationssystem (MCS) zur Positionsbestimmung (PO1) mindestens eines Teilnehmergeräts (UE1) eine Vielzahl von Basisstationen (NB1 mit NB4) zur Aufteilung in Funkzellen (CE1 mit CE4) aufweist, wobei von jeder Basisstation (NB1) jeweils eine Funkzelle (CE1) aufgespannt und diese hinsichtlich des Funkverkehrs über mindestens eine Luftschnittstelle (LS1) versorgt ist, wobei mindestens ein Ortungsmesssignal (PS21, PS31, PS32, PS41) von mindestens einem zusätzlichen Positionselement (PE21, PE31, PE32, PE41, PE42) gesendet wird,
**dadurch gekennzeichnet,**
**dass** die Auswerte-/Recheneinheit (AE) zur Positionsbestimmung eines Teilnehmergeräts (UE1) in einer Aufenthaltsfunkzelle (CE1), in der kein Positionselement oder zu wenige Positionselemente vorhanden sind, mindestens ein Ortungssignal (PS21) heranzieht, das bei einer Mischung von Funkzellen (CE1 mit CE4) mit und ohne zusätzlichen Positionselementen (PE21, PE31, PE32, PE41, PE42) von mindestens einem Positionselement (PE21) aus mindestens einer Funkzelle (CE2) gesendet wird, die der Aufenthaltsfunkzelle (CE1) des jeweilig zu ortenden Teilnehmergeräts (UE1) benachbart ist, in der kein Positionselement oder zu wenige Positionselemente vorhanden sind.

## Claims

1. Method (PO1) for determining the position of at least one subscriber device (UE1) of a radio communication system (MCS) which has a plurality of base stations (NB1 to NB4) for bringing about division into radio cells (CE1 to CE4), each base station producing one radio cell in each case and said radio cell being supplied, in terms of radio traffic, via at least one air interface (LS1) at least one locating measuring signal (PS21, PS31, PS32, PS41) being transmitted by at least one additional position element (PE21, PE31, PE32, PE41, PE42) **characterized in that**, when there is an assortment of radio cells (CE1 with CE4) with and without additional position elements (PE21, PE31, PE32, PE41, PE42), at least one locating measuring signal (PS21) is transmitted by at least one position element (PE21) from at least one radio cell (CE2) which is adjacent to the radio cell (CE1) in which the subscriber device (UE1) to be respectively located is present, and in which no position element or too few position elements are present, this locating measuring signal (PS21) being used to determine the position of the subscriber device (UE1) in the radio cell (CE1) in which it is present at that particular time and in which no position element or too few position elements are present.

2. Method according to Claim 1, **characterized in that** the signalling on the air interface (LS1) of the base station (NB1) of the respective radio cell (CE1) is carried out using a time-division multiplex method, in particular using the TDD (time division duplex) mode of the UMTS (Universal Mobile Telecommunication System) standard.

3. Method according to one of the preceding claims, **characterized in that** a unique identification code is assigned to the locating measuring signal (PS21) of the respective position element (PE21).

4. Method according to one of the preceding claims, **characterized in that** a mobile radio device, in particular mobile telephone, is used as the subscriber device (UE1).

5. Method according to one of the preceding claims, **characterized in that** the locating measuring signal (PS21) is transmitted by the respective position element (PE21) during at least one unoccupied signal section (DA1) which is already present in the signalling traffic of the base station (NB2) of its assigned radio cell (CE1) and/or of the base station (NB1) of the radio cell (CE1) in which the mobile radio device (UE1) to be located is present.

6. Method according to one of Claims 1 to 4, **characterized in that** the locating measuring signal (PS21) is transmitted by the respective position element (PE21), during its specially inserted quiescent time, into the signalling traffic of the base station (NB2) of its assigned radio cell (CE1) and/or of the base station (NB1) of the radio cell (CE1) in which the subscriber device (UE1) to be located is present.

7. Method according to one of the preceding claims, **characterized in that** locating measuring signals of at least two, in particular of three, position elements (PE21, PE31) are used for determining the position of a subscriber device (UE1) which is to be located.

8. Method according to one of the preceding claims, **characterized in that** the position elements (PE31, PE32) are synchronized with respect to the timing pattern of the radio signalling on the air interface (LS1) of the base station (NB1) of the radio cell (CE1) in which the subscriber device (UE1) to be respectively located is present.

9. Method according to one of the preceding claims, **characterized in that** the transit time of the respective locating measuring signal (PS21, PS31, PS32, PS41, PS42) for its transit path between its position element (PE21, PE31, PE32, PE41, PE42) and the subscriber device (UE1) to be respectively located is determined and made available for evaluation.

10. Device for determining the position of at least one subscriber device (UE1) of a radio communication system (MCS), using an evaluation/calculating unit (AE), this radio communication system (MCS) having, for the purpose of determining the position (P01) of at least one subscriber device (UE1), a plurality of base stations (NB1 to NB4) for bringing about division into radio cells (CE1 to CE4), each base station (NB1) producing one radio cell (CE1) in each case and said radio cell (CE1) being supplied, in terms of the radio traffic, via at least one air interface (LS1), and at least one locating measuring signal (PS21, PS31, PS32, PS41) being transmitted by at least one additional position element (PE21, PE31, PE32, PE41, PE42), **characterized in that** the evaluating/calculating unit (AE) uses, for the purpose of determining the position of a subscriber device (UE1) in a radio cell (CE1) in which it is located and in which no position element or too few position elements are present, at least one locating signal (PS21) which, when there is an assortment of radio cells (CE1 to CE4) with and without additional position elements (PE21, PE31, PE32, PE41, PE42), is transmitted by at least one position element (PE21) from at least one radio cell (CE2) which is adjacent to the radio cell (CE1) in which the subscriber device (UE1) to be respectively located is present and in which no position element or too few position elements are present.

## Revendications

1. Procédé de détermination de position (P01) d'au moins un appareil d'abonné (UE1) d'un système de radiocommunication (MCS) qui comporte une multitude de stations de base (NB1 à NB4) pour la division en cellules radio (CE1 à CE4), chaque station de base (NB1) couvrant une cellule radio (CE1) et cette dernière étant alimentée du point de vue du trafic radio par l'intermédiaire d'au moins une interface radio (LS1), au moins un signal de mesure de localisation (PS21, PS31, PS32, PS41) étant émis par au moins un élément de positionnement supplémentaire (PE21, PE31, PE32, PE41, PE42),
**caractérisé par le fait que**, lors d'un mélange de cellules radio (CE1 à CE4) avec et sans éléments de positionnement supplémentaires (PE21, PE31, PE32, PE41, PE42), au moins un signal de mesure de localisation (PS21) est émis par au moins un élément de positionnement (PE21) à partir d'au moins une cellule radio (CE2) qui est voisine de la cellule radio de séjour (CE1) de l'appareil d'abonné respectif à localiser (UE1) dans laquelle il n'y a pas d'élément de positionnement ou il y a trop peu d'éléments de positionnement, ce signal de mesure de localisation (PS21) étant exploité pour la détermination de position de l'appareil d'abonné (UE1) dans la cellule radio de séjour momentanée (CE1) de celui-ci dans laquelle il n'y a pas d'élément de positionnement ou il y a trop peu d'éléments de positionnement.

2. Procédé selon la revendication 1,
**caractérisé par le fait que** la signalisation sur l'interface radio (LS1) de la station de base (NB1) de la cellule radio respective (CE1) est effectuée selon un procédé de multiplexage temporel, notamment dans le mode TDD (Time Division Duplex) du standard UMTS (Universal Mobile Telecommunication System).

3. Procédé selon l'une des revendications précédentes,
**caractérisé par le fait qu'**un code d'identification univoque est associé au signal de mesure de localisation (PS21) de l'élément de positionnement respectif (PE21).

4. Procédé selon l'une des revendications précédentes,
**caractérisé par le fait qu'**un appareil de radiocommunication mobile, notamment un téléphone de radiocommunication mobile, est utilisé comme appareil d'abonné (UE1).

5. Procédé selon l'une des revendications précédentes,
**caractérisé par le fait que** le signal de mesure de localisation (PS21) est émis par l'élément de positionnement respectif (PE21) pendant au moins un segment de signal inoccupé déjà existant (DA1) dans le trafic de signalisation de la station de base (NB2) de la cellule radio associée (CE2) et/ou de la station de base (NB1) de la cellule radio de séjour (CE1) de l'appareil de radiocommunication mobile à localiser (UE1).

6. Procédé selon l'une des revendications 1 à 4,
**caractérisé par le fait que** le signal de mesure de localisation (PS21) est émis par l'élément de positionnement respectif (PS21) pendant un temps de repos spécialement inséré dans le trafic de signalisation de la station de base (NB2) de la cellule radio associée (CE2) et/ou de la station de base (NB1) de la cellule radio de séjour (CE1) de l'appareil de radiocommunication mobile à localiser (UE1).

7. Procédé selon l'une des revendications précédentes,
**caractérisé par le fait que**, pour la détermination de position d'un appareil d'abonné à localiser (UE1), on exploite des signaux de mesure de localisation d'au moins deux, notamment trois, éléments de positionnement (PE21, PE31).

8. Procédé selon l'une des revendications précédentes,
**caractérisé par le fait que** les éléments de positionnement (PE31, PE32) sont synchronisés par rapport à la trame temporelle de la signalisation radio sur l'interface radio (LS1) de la station de base (NB1) de la cellule radio de séjour (CE1) de l'appareil d'abonné respectif à localiser (UE1).

9. Procédé selon l'une des revendications précédentes,
**caractérisé par le fait que** l'on détermine le temps de propagation du signal de mesure de localisation respectif (PS21, PS31, PS32, PS41, PS42) pour son parcours entre son élément de positionnement (PE21, PE31, PE32, PE41, PE42) et l'appareil d'abonné respectif à localiser (UE1) et que l'on met ce temps de propagation à la disposition de l'évaluation.

10. Dispositif pour la détermination de position d'au moins un appareil d'abonné (UE1) d'un système de radiocommunication (MCS) à l'aide d'une unité d'évaluation et de calcul (AE), ce système de radiocommunication (MCS) comportant pour la détermination de position (PO1) d'au moins un appareil d'abonné (UE1) une multitude de stations de base (NB1 à NB4) pour la division en cellules radio (CE1 à CE4), chaque station de base (NB1) couvrant une cellule radio (CE1) et cette dernière étant alimentée du point de vue du trafic radio par l'intermédiaire d'au moins une interface radio (LS1),
au moins un signal de mesure de localisation (PS21, PS31, PS32, PS41) étant émis par au moins un élément de positionnement supplémentaire (PE21, PE31, PE32, PE41, PE42),
**caractérisé par le fait que** l'unité d'évaluation et de calcul (AE) exploite pour la détermination de position d'un appareil d'abonné (UE1) dans une cellule radio de séjour (CE1) dans laquelle il n'y a pas d'élément de positionnement ou il y a trop peu d'éléments de positionnement au moins un signal de localisation (PS21) qui, lors d'un mélange de cellules radio (CE1 à CE4) avec et sans éléments de positionnement supplémentaires (PE21, PE31, PE32, PE41, PE42), est émis par au moins un élément de positionnement (PE21) à partir d'au moins une cellule radio (CE2) qui est voisine de la cellule radio de séjour (CE1) de l'appareil d'abonné respectif à localiser (UE1) dans laquelle il n'y a pas d'élément de positionnement ou il y a trop peu d'éléments de positionnement.
